# EUROPÄISCHE PATENTSCHRIFT

(11) **EP 1 249 910 B1**
(45) Veröffentlichungstag und Bekanntmachung des Hinweises auf die Patenterteilung: **23.03.2011**
(21) Anmeldenummer: 02090130.2
(22) Anmeldetag: 04.04.2002
(51) Int. Cl.: H02B 5/06

(54) **Hochspannungs-Leistungsschalter für eine druckgasisolierte Schaltanlage**
High voltage switch for a gas insulated switching installation
Disjoncteur haute-tension pour une installation de commutation à isolation gaseuse

(30) Priorität: 12.04.2001 DE 10119530
(43) Veröffentlichungstag der Anmeldung: 16.10.2002
(73) Patentinhaber: SIEMENS AKTIENGESELLSCHAFT, 80333 München (DE)
(72) Erfinder: Meinherz, Manfred, 13467 Berlin (DE)

(56) Entgegenhaltungen:
- WO-A-00/45486
- DE-A- 4 320 906
- US-A- 4 241 379
- US-A- 4 644 442

## Beschreibung

Die Erfindung liegt auf dem Gebiet der Verteilung elektrischer Energie im Hoch- und Höchstspannungsbereich und ist für die Ausgestaltung eines Hochspannungs-Leistungsschalters für eine druckgasisolierte Schaltanlage, bestehend aus zumindest einer horizontal angeordneten Unterbrechereinheit, einem die Unterbrechereinheit aufnehmenden rohrartigen Kapselungsgehäuse und einer im Mantelbereich des Kapselungsgehäuses angeordneten Antriebseinrichtung, wobei die Unterbrechereinheit eine erste und eine zweite Stromzuführung aufweist und an dem Kapselungsgehäuse an jeder Stirnseite ein Anschlussflansch vorgesehen ist, wobei durch einen Anschlussflansch zumindest ein an die erste Stromzuführung angeschlossener elektrischer Leiter hindurchgeführt ist.

Bei einem bekannten Hochspannungs-Leistungsschalter dieser Art weist die Unterbrechereinheit eine erste und eine zweite Stromzuführung auf; weiterhin ist an jeder Stirnseite des Kapselungsgehäuses ein Anschlussflansch vorgesehen, durch welche zumindest ein elektrischer Leiter hindurchführbar ist. Zum Aufbau einer Schaltanlage sind an das Kapselungsgehäuse weitere Kapselungsbausteine anflanschbar. Solche Kapselungsbausteine sind beispielsweise Stromwandler, Trenner- und/oder Erder-Bausteine sowie Bausteine zum Anschluss von Kabeln und Freileitungen. Durch die Anordnung stirnseitiger Anschlussflansche ist es möglich, beliebige Kapselungsbausteine in einer Ebene zu kombinieren und so beispielsweise sogenannte H-Schaltungen platzsparend zu realisieren, wie sie vor allem für Freiluftschaltanlagen charakteristisch sind. - Diese Schaltanlagen können ein- oder dreipolig gekapselt ausgeführt sein. Bei einpoliger Kapselung kann die Unterbrechereinheit mehrfachunterbrechend sein (WO00/45486).
Weiter ist bekannt, ein Gehäuse eines Hochspannungs-Leistungsschalters aus mehreren Teilstücken zusammenzusetzen, um flexible Anschlussmöglichkeiten zu erhalten (DE 43 20 906 C2). Darüber hinaus sind verschiedene Schaltpläne zum Einsatz von Leistungsschaltern bekannt (US 4,241,379).

Ausgehend von einem Hochspannungs-Leistungsschalter mit den Merkmalen des Oberbegriffes des Anspruches 1 liegt der Erfindung die Aufgabe zugrunde, den Hochspannungs-Leistungsschalter so auszugestalten, dass er auch zum platzsparenden Aufbau anderer in Freiluftschaltanlagen üblicher Schaltungen einsetzbar ist, insbesondere von Schaltungen mit Doppelsammelschienen.

Zur Lösung dieser Aufgabe ist gemäß Erfindung vorgesehen, dass an den Anschlussflansch, durch welchen ein an die erste Stromzuführung angeschlossener elektrischer Leiter hindurchgeführt ist, ein weiterer Kapselungsbaustein geflanscht ist und eine gekapselte Sammelschiene an die zweite Stromzuführung der Unterbrechereinheit angeschlossen ist und im Mantelbereich des Kapselungsgehäuses zusätzlich ein weiterer Anschlussflansch angeordnet ist, an welchem ein Sammelschienenbaustein der gekapselten Sammelschiene abgestützt ist.

Durch die zusätzliche Anordnung eines weiteren Anschlussflansches sind gekapselte Hochspannungs-Leistungsschalter überaus variabel miteinander kombinierbar. Die Nutzung des zusätzlichen Anschlussflansches zum Anschluss einer Sammelschiene über die beliebig viele Leistungsschalter kuppelbar sind, lässt nämlich die stirnseitigen Anschlüsse der Hochspannungs-Leistungsschalter frei, um sie ggf. mit anderen Kapselungsbausteinen, insbesondere Stromwandlern und Trenner-Erder-Bausteinen sowie Kapselungsbausteinen zum Anschluss von Kabeln, Freileitungen oder Transformatoren zu belegen.

In weiterer Ausgestaltung der Erfindung ist im Mantelbereich des Kapselungsgehäuses ein zweiter weiterer Anschlussflansch vorgesehen. - Mit einer solchen Ausgestaltung wird die Variabilität des Einsatzes des neuen Hochspannungs-Leistungsschalters noch weiter erhöht. An einem zweiten weiteren Anschlussflansch ist beispielsweise eine weitere gekapselte Sammelschiene, insgesamt eine Doppelsammelschiene, an den Hochspannungs-Leistungsschalter anschließbar. Auch in diesem Fall ist gewährleistet, dass die stirnseitigen Anschlussflansche des Hochspannungs-Leistungsschalters weiterhin zum Anschluss von weiteren Kapselungsbausteinen frei zugänglich sind. - Je nach aufzubauender Schaltanlage ist die Lage des zweiten weiteren Anschlussflansches im Mantelbereich des Kapselungsgehäuses frei wählbar, beispielsweise diametral zum ersten weiteren Anschlussflansch. Besondere Vorteile ergeben sich, wenn der zweite weitere Anschlussflansch in axialer Richtung des Kapselungsgehäuses neben dem ersten weiteren Anschlussflansch angeordnet ist. In diesem Fall ergibt sich eine besonders kompakte Zuordnung der Sammelschiene zum Hochspannungs-Leistungsschalter. Eine derartige Gestaltung eignet sich unter anderem zum Aufbau eines Schaltfeldes in Form eines Kuppelfeldes.

Eine vorteilhafte Ausgestaltung kann vorsehen, dass an dem weiteren Kapselungsbaustein eine Freiluftdurchführung abgestützt ist. Mittels einer Freiluftdurchführung sind Leistungsschalter in bestehende Freileitungsnetze einfügbar bzw. austauschbar.

In weiterer Ausgestaltung der Erfindung kann gegenüberliegend zu dem ersten weiteren Anschlussflansch ein dritter weiterer Anschlussflansch angeordnet sein.

Wird ein dritter weiterer Anschlussflansch dem ersten weiteren Anschlussflansch gegenüberliegend angeordnet, so wird durch eine derartige Ausbildung der Aufbau einer druckgasisolierten Schaltanlage mit am Kapselungsgehäuse gegenüberliegend angeordneten druckgasisolierten Sammelschienen ermöglicht. Bei Nutzung des zweiten weiteren Anschlussflansches lassen sich auch gekapselte Schaltanlagen mit Dreifach-Sammelschienen platzsparend realisieren. Auch in diesem Fall sind die stirnseitigen Anschlussflansche zum Anschluss weiterer Kapselungsbausteine verfügbar.

Mehrere Ausführungsbeispiele der Erfindung sind in den Figuren 1 bis 4 dargestellt.

Dabei zeigt die
- Figur 1: ein erstes Ausführungsbeispiel eines Hochspannungs-Leistungsschalters, der in ein dreipolig gekapseltes Abgangsfeld eingebunden ist, die
- Figur 2: ein zweites Ausführungsbeispiel, bei dem der Hochspannungsleistungsschalter, zum Aufbau eines dreipolig gekapselten Kuppelfeldes vorgesehen ist, die
- Figur 3: ein drittes Ausführungsbeispiel eines Hochspannungs-Leistungsschalters, der in ein einpolig gekapseltes Abgangsfeld eingebunden ist, und die
- Figur 4: ein viertes Ausführungsbeispiel, bei dem der Hochspannungsleistungsschalter zum Aufbau eines einpolig gekapselten Kuppelfeldes vorgesehen ist.

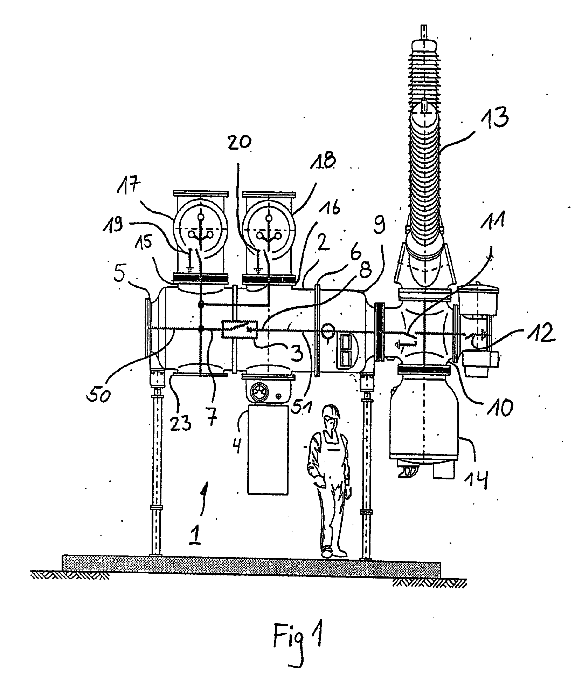

Figur 1 zeigt einen Hochspannungs-Leistungsschalter 1, der Teil eines typischen Abgangsfeldes einer Freiluftschaltanlage ist, wobei die Schaltanlage druckgasisoliert ausgeführt ist. Die Schaltanlage ist im Übrigen dreipolig ausgeführt, d. h. die jeweiligen zu einem mehrphasigen Spannungssystem gehörenden elektrischen Komponenten sind innerhalb einer gemeinsamen Kapselung angeordnet. Demgemäß ist die Unterbrechereinheit 3 des Hochspannungs-Leistungsschalters dreipolig ausgeführt und von einem Kapselungsgehäuse 2 umgeben. Im Mantelbereich des Kapselungsgehäuses 2 ist eine Antriebseinrichtung 4 zum Antrieb der Unterbrechereinheit 3 angeflanscht. Das rohrartige Kapselungsgehäuse 2 weist an der einen Stirnseite einen ersten stirnseitigen Anschlussflansch 5 und an der anderen Stirnseite einen zweiten stirnseitigen Anschlussflansch 6 auf. Die Unterbrechereinheit 3 ist mit einer ersten dreipoligen Stromzuführung 7 und mit einer zweiten dreipoligen Stromzuführung 8 versehen. An die jeweilige Stromzuführung 7, 8 ist zumindest ein dreipoliger elektrischer Leiter 50, 51 anschließbar und durch die stirnseitigen Anschlussflansche 5, 6 hindurchführbar. Am zweiten stirnseitigen Anschlussflansch 6 ist unter Zwischenschaltung eines Stromwandlerbausteins 9 ein Kreuzbaustein 10 angeflanscht. In den Kreuzbaustein 10 ist eine Trenner-Erder-Kombination 11 eingebaut; weiterhin ist ein separater Leitungserder 12 vorgesehen. Zum Anschluss einer Freileitung ist an den Kreuzbaustein 10 eine Freiluftdurchführung 13 angeschlossen. Zur Messung der anliegenden Spannung ist an dem Kreuzbaustein 10 weiterhin ein Spannungswandler 14 angeschlossen. Zur Messung des durch die zweite Stromzuführung 8 fließenden Stromes ist zwischen dem zweiten Anschlussflansch 6 und dem Kreuzbaustein 10 ein Stromwandlerbaustein 9 angeordnet.

Mantelseitig gegenüberliegend zur Antriebseinrichtung 4 sind ein erster weiterer Anschlussflansch 15 sowie ein zweiter weiterer Anschlussflansch 16 vorgesehen. An den ersten weiteren Anschlussflansch 15 ist ein Sammelschienenbaustein 17 einer ersten Sammelschiene angeschlossen. An dem zweiten weiteren Anschlussflansch 16 ist ein Sammelschienenbaustein 18 einer zweiten Sammelschiene angeschlossen. Die beiden Sammelschienenbausteine 17 und 18 sind ebenfalls jeweils dreipolig gekapselt ausgeführt. Über zwei Sammelschienen-Trenner/Erder 19 und 20 sind die Sammelschienenbausteine 17 und 18 mit der ersten Stromzuführung 7 verschaltbar.

Der zweite weitere Anschlussflansch 16 ist in axialer Richtung des Kapselungsgehäuses 2 neben dem ersten weiteren Anschlussflansch 15 angeordnet. Dem ersten weiteren Anschlussflansch 15 diametral gegenüberliegend ist ein dritter weiterer Anschlussflansch 23 angeordnet. An diesen ist wahlweise ein Sammelschienenbaustein einer dritten Sammelschiene oder-alternativ zu der Anordnung des Sammelschienenbausteines 18 an dem zweiten weiteren Anschlussflansch 16 - der Sammelschienenbaustein 18 ankoppelbar.

In dem Ausführungsbeispiel gemäß Figur 1 ist der erste stirnseitige Anschlussflansch 5 mit einem Deckel verschlossen. An den ersten stirnseitigen Anschlussflansch 5 ist bei Bedarf jedoch ein weiterer Kapselungsbaustein anschließbar.

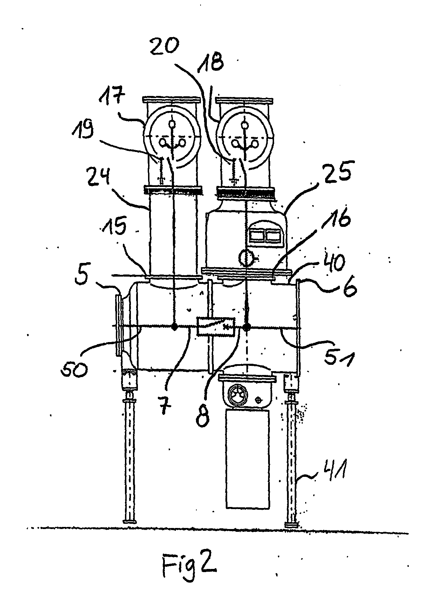

Für das in Figur 2 dargestellte Kuppelfeld, das dreipolig gekapselt ausgeführt ist, ist ein Hochspannungs-Leistungsschalter verwendet, der abweichend von dem in Figur 1 dargestellten Hochspannungs-Leistungsschalter ein Kapselungsgehäuse 40, welches außer den beiden stirnseitigen mit Deckeln verschlossenen Anschlussflanschen 5, 6 nur zwei weitere im Mantelbereich axial nebeneinander angeordnete weitere Anschlussflansche 15, 16 aufweist. An diese beiden weiteren Anschlussflansche 15, 16 sind der Sammelschienenbaustein 17 einer ersten Sammelschiene und der Sammelschienenbaustein 18 einer zweiten Sammelschiene angeschlossen. Jeder Sammelschienenbaustein 17 und 18 ist dreipolig ausgebildet. Der Sammelschienenbaustein 17 ist über ein Zwischengehäuse 24 an das Kapselungsgehäuse 40 angeschlossen. Der Sammelschienebaustein 18 ist unter Zwischenschaltung eines Stromwandlerbausteins 25 an das Kapselungsgehäuse 40 angeschlossen

Der Sammelschienenbaustein 17 ist über einen kombinierten Sammelschienen-Trenner/Erder 19 mit der ersten Stromzuführung 7 der Unterbrechereinheit 3 verschaltbar. Der Sammelschienenbaustein 18 ist über einen kombinierten Sammelschienen-Trenner/Erder 20 mit der zweiten Stromzuführung 8 der Unterbrechereinheit 3 verschaltbar. Somit ist der Sammelschienenbaustein 17 mit dem Sammelschienenbaustein 18 und demzufolge die erste Sammelschiene mit der zweiten Sammelschiene durch die Unterbrechereinheit 3 kuppelbar.

Um das Kuppelfeld gemäß Figur 2 in einfacher Weise mit dem in der Figur 1 dargestellten Abgangsfeld kombinieren zu können, ist das Traggestell 41 derartig verkürzt worden, dass im montierten Zustand die Sammelschienenbausteine der Figur 1 und die Sammelschienenbausteine der Figur 2 in der gleichen Ebene verlaufen. An die stirnseitigen Anschlussflansche 5, 6 des Kuppelfeldes gemäß Figur 2 können weitere Kapselungsbausteine, wie beispielsweise Spannungswandler, angeschlossen werden.

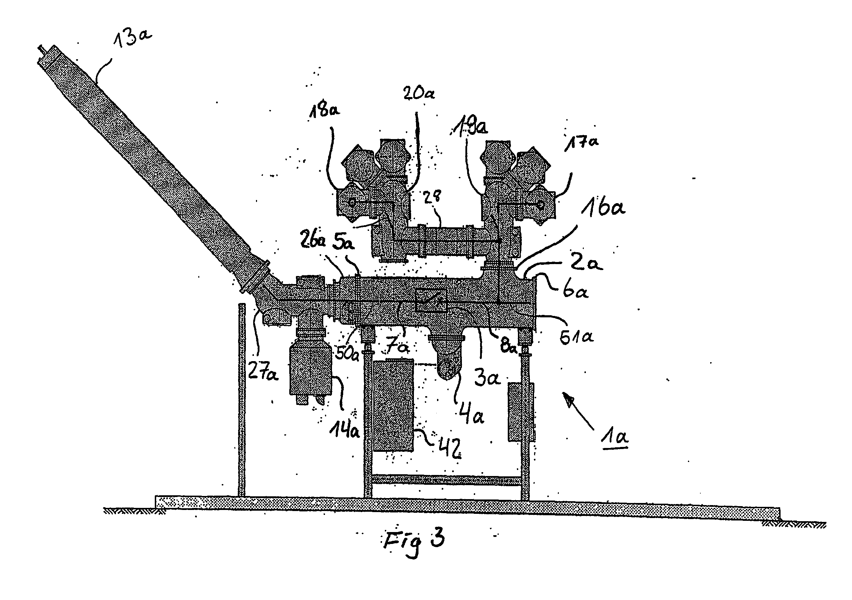

Das in Figur 3 dargestellte Abgangsfeld ist für den Einsatz im Höchstspannungsbereich, d.h. für die Spannungsebenen 420 bzw. 550 kV vorgesehen. Daher sind die einzelnen Leiter des mehrphasigen Spannungssystems einpolig gekapselt. In dem horizontal angeordneten rohrartigen Kapselungsgehäuse 2a ist eine einpolige Unterbrechereinheit 3a eines Hochspannungs-Leistungsschalters 1a angeordnet, die als einfach unterbrechende Unterbrechereinheit 3a ausgeführt ist, aber auch mehrfach unterbrechende ausgeführt sein kann. Stirnseitig sind ein erster Anschlussflansch 5a und ein zweiter Anschlussflansch 6a vorgesehen. An den ersten Anschlussflansch 5a ist ein Stromwandlerbaustein 26a angeschlossen. An diesen wiederum schließt sich ein Abgangsbaustein 27a an, an den ein Spannungswandlerbaustein 14a sowie eine Freiluftdurchführung 13a angeschlossen sind. Die Unterbrechereinheit 3a weist eine erste einpolige Stromzuführung 7a und eine zweite einpolige Stromzuführung 8a sowie einen einpoligen elektrischen Leiter 50a, 51a auf.

Im Bereich der Mantelfläche des Kapselungsgehäuse 2a des Hochspannungs-Leistungsschalters 1a ist ein Antriebsgetriebe 4a angeflanscht, dem eine Antriebseinrichtung 42 zugeordnet ist. Im nach oben weisenden Bereich der Mantelfläche ist ein erster weiterer Anschlussflansch 16a angeordnet. An dem ersten weiteren Anschlussflansch 16a ist ein Sammelschienenbaustein 17a einer ersten Sammelschiene über einen Sammelschienen-Trennerbaustein 19a mit der zweiten Stromzuführung 8a der Unterbrechereinheit 3a verschaltbar. Ein Sammelschienenbaustein 18a einer zweiten Sammelschiene ist über einen Sammelschienen-Trennerbaustein 20a mittels eines waagerechten Verbindungsbausteines 28 an den ersten Sammelschienen-Trennerbaustein 19a anschaltbar. Somit ist der Sammelschienenbaustein 18a mit der zweiten Stromzuführung 8a der Unterbrechereinheit 3a verschaltbar. Die beiden Sammelschienenbausteine 17a und 18a sind oberhalb des Kapselungsgehäuses 2a angeordnet. Jeder Sammelschienenbaustein 17a, 18a ist einpolig ausgebildet.

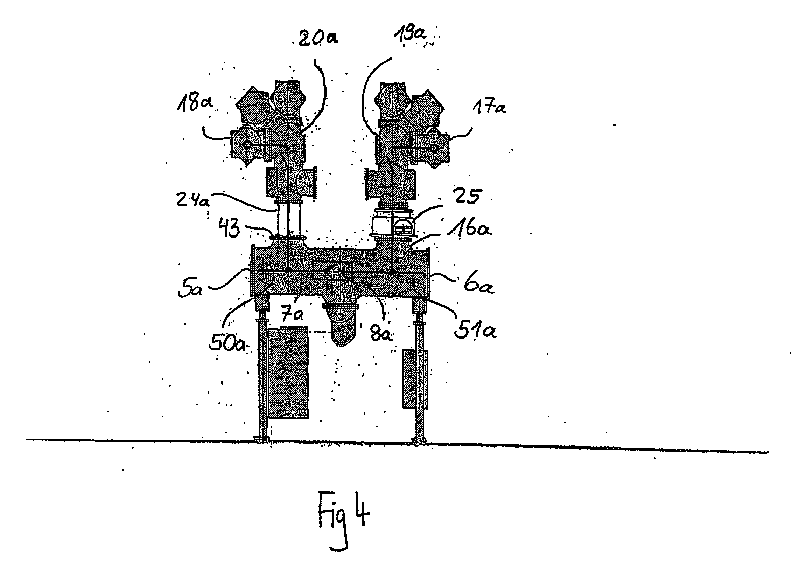

Die Figur 4 zeigt abweichend von der Figur 2 ein Kuppelfeld in einpolig gekapselter Ausführung, wobei für den Aufbau des Kuppelfeldes ein Hochspannungs-Leistungsschalter gemäß Figur 3 verwendet ist, der jedoch zusätzlich einen zweiten weiteren Anschlussflansch 43 aufweist. An den ersten weiteren Anschlussflansch 16a und an den zweiten weiteren Anschlussflansch 43 ist jeweils ein Sammelschienen-Trennerbaustein 19a bzw. 20a angeschlossen. An den Sammelschienen-Trennerbaustein 19a ist ein Sammelschienenbaustein 17a einer ersten Sammelschiene angeschlossen. An den Sammelschienen-Trennerbaustein 20a ist ein Sammelschienenbaustein 18a einer zweiten Sammelschiene angeschlossen. Der Sammelschienen-Trennerbaustein 19a ist unter Zwischenschaltung eines Stromwandlerbausteins 25 angeflanscht. Damit die Sammelschienenbausteine 17a, 18a auf gleicher Höhe angeordnet sind, ist der Sammelschienen-Trennerbaustein 20a unter Zwischenschaltung eines Zwischengehäuses 24a angeschlossen. Der Sammelschaltschienenbaustein 17a ist mit der zweiten Stromzuführung 8a elektrisch verschaltbar. Der Sammelschienenbaustein 18a ist mit der ersten Stromzuführung 7a der Unterbrechereinheit 3a elektrisch verschaltbar. Somit ist über die Unterbrechereinheit 3a der Sammelschienenbaustein 17a mit dem Sammelschienenbaustein 18a kuppelbar. - Die stirnseitigen Anschlussflansche 5a, 6a sind durch Deckel verschlossen.

## Patentansprüche

1. Hochspannungs-Leistungsschalter (1,1a) für eine druckgasisolierte Schaltanlage, bestehend aus
zumindest einer horizontal angeordneten Unterbrechereinheit (3,3a),
einem die Unterbrechereinheit (3,3a) aufnehmenden rohrartigen Kapselungsgehäuse (2,2a,40) und
einer im Mantelbereich des Kapselungsgehäuses (2,2a,40) angeordneten Antriebseinrichtung (4,42),
wobei die Unterbrechereinheit (3,3a) eine erste und eine zweite Stromzuführung (7,8,7a,8a) aufweist und an dem Kapselungsgehäuse (2,2a,40) an jeder Stirnseite ein Anschlussflansch (5,6,5a,6a) vorgesehen ist, wobei durch einen Anschlussflansch zumindest ein an die erste Stromzuführung (7,8,7a,8a) angeschlossener elektrischer Leiter (50,51,50a,51a) hindurchgeführt ist,
**dadurch gekennzeichnet, dass**
an den Anschlussflansch, durch welchen ein an die erste Stromzuführung (7,8,7a,8) angeschlossener elektrischer Leiter (50,51,50a,51a) hindurchgeführt ist, ein weiterer Kapselungsbaustein geflanscht ist und
eine gekapselte Sammelschiene an die zweite Stromzuführung (7,8,7a,8a) der Unterbrechereinheit (3,3a) angeschlossen ist und im Mantelbereich des Kapselungsgehäuses (2,2a,40) zusätzlich ein weiterer Anschlussflansch (15,16a) angeordnet ist, an welchem ein Sammelschienenbaustein (17, 18) der gekapselten Sammelschiene abgestützt ist.

2. Hochspannungs-Leistungsschalter nach Anspruch 1,
**dadurch gekennzeichnet, dass**
an dem weiteren Kapselungsbaustein eine Freiluftdurchführung (13, 13a) abgestützt ist.

3. Hochspannungs-Leistungsschalter (1,1a) nach Anspruch 1 oder 2,
**dadurch gekennzeichnet,**
**dass** im Mantelbereich des Kapselungsgehäuses (2,2a,40) ein zweiter weiterer Anschlussflansch (16,43) vorgesehen ist.

4. Hochspannungs-Leistungsschalter (1,1a) nach Anspruch 3,
**dadurch gekennzeichnet,**
**dass** der zweite weitere Anschlussflansch (16,43) in axialer Richtung des Kapselungsgehäuses neben dem ersten weiteren Anschlussflansch (15,16a) angeordnet ist.

5. Hochspannungs-Leistungsschalter (1,1a) nach Anspruch 3 oder 4,
**dadurch gekennzeichnet,**
**dass** gegenüberliegend zu dem ersten weiteren Anschlussflansch (15,16a) ein dritter weiterer Anschlussflansch (23) angeordnet ist.

## Claims

1. High-voltage circuit breaker (1, 1a) for a compressed-gas-insulated switchgear assembly, consisting of at least one horizontally arranged interrupter unit (3, 3a),
a tubular encapsulating housing (2, 2a, 40) which holds the interrupter unit (3, 3a) and
a drive device (4, 42) which is arranged in the casing area of the encapsulating housing (2, 2a, 40)
wherein the interrupter unit (3, 3a) has a first and a second power supply line (7, 8, 7a, 8a), and a connecting flange (5, 6, 5a, 6a) is provided on each end face of the encapsulating housing (2, 2a, 40), wherein at least one electrical conductor (50, 51, 50a, 51a), which is connected to the first power supply line (7, 8, 7a, 8a) is passed through a connecting flange,
**characterized in that**
a further encapsulating module is flange-connected to the connecting flange through which an electrical conductor (50, 51, 50a, 51a) is passed which is connected to the first power supply line (7, 8, 7a, 8) and,
- an encapsulated busbar is connected to the second power supply line (7, 8, 7a, 8a) of the interrupter unit (3, 3a), and a further connecting flange (15, 16a), on which a busbar module (17, 18) of the encapsulated busbar is supported, is additionally arranged in the casing area of the encapsulating housing (2, 2a, 40).

2. High-voltage circuit breaker according to Claim 1,
**characterized in that**
an outdoor bushing (13, 13a) is supported on the further encapsulated module.

3. High-voltage circuit breaker (1, 1a) according to Claim 1 or 2,
**characterized in that**
a second, further connecting flange (16, 43) is provided in the casing area of the encapsulating housing (2, 2a, 40).

4. High-voltage circuit breaker (1, 1a) according to Claim 3,
**characterized in that**
the second, further connecting flange (16, 43) is arranged alongside the first, further connecting flange (15, 16a) in the axial direction of the encapsulating housing.

5. High-voltage circuit breaker (1, 1a) according to Claim 3 or 4,
**characterized in that**
a third, further connecting flange (23) is arranged opposite the first, further connecting flange (15, 16a).

## Revendications

1. Disjoncteur ( 1, 1a ) de haute tension pour une installation de commutation isolée par du gaz sous pression, constitué de au moins une unité ( 3, 3a ) d'interruption disposée horizontalement,
un boîtier ( 2, 2a, 40 ) tubulaire de blindage recevant l'unité ( 3, 3a ) d'interruption, et
un dispositif ( 4, 42 ) d'entraînement disposé dans la partie de surface latérale du boîtier ( 2, 2a, 40 ) de blindage,
dans lequel l'unité ( 3, 3a ) d'interruption a une première et une deuxième entrées ( 7, 8, 7a, 8a ) de courant et il est prévu sur le boîtier ( 2, 2a, 40 ) de blindage sur chaque côté frontal un flasque ( 5, 6, 5a, 6a ) de raccordement, au moins un conducteur ( 50, 51, 50a, 51a ) raccordé à la première entrée ( 7, 8, 7a, 8a ) de courant passant à travers un flasque de raccordement,
**caractérisé en ce que**
sur le flasque de raccordement, à travers lequel un conducteur ( 50, 51, 50a, 51a ) électrique raccordé à la première entrée ( 7, 8, 7a, 8a ) de courant passe, est bridé un autre module de blindage et une barre collectrice blindée est raccordée à la deuxième entrée ( 7, 8, 7a, 8a ) de courant de l'unité ( 3, 3a ) d'interruption et dans la partie de surface latérale du boîtier ( 2, 2a, 40 ) de blindage est disposé supplémentairement un autre flasque ( 15, 16a ) de raccordement, sur lequel s'appuie un module ( 17, 18 ) de la barre collectrice blindée.

2. Disjoncteur de haute tension suivant la revendication 1,
**caractérisé en ce que**
une traversée ( 13, 13a ) vers l'extérieur s'appuie sur l'autre module de blindage.

3. Disjoncteur ( 1, 1a ) de haute tension suivant la revendication 1 ou 2,
**caractérisé**
**en ce qu'**un deuxième autre flasque ( 16, 43 ) de raccordement est prévu dans la partie de la surface latérale du boîtier ( 2, 2a, 40 ) de blindage.

4. Disjoncteur ( 1, 1a ) de haute tension suivant la revendication 3,
**caractérisé**
**en ce que** le deuxième autre flasque ( 16, 43 ) de raccordement est disposé dans la direction axiale du boîtier de blindage à côté du premier autre flasque ( 15, 16a ) de raccordement.

5. Disjoncteur ( 1, 1a) de haute tension suivant la revendication 3 ou 4,
**caractérisé**
**en ce qu'**un troisième autre flasque ( 23 ) de raccordement est disposé à l'opposé du premier autre flasque ( 15, 16a ) de raccordement.
